# EUROPEAN PATENT SPECIFICATION

(11) **EP 1 554 873 B1**
(45) Date of publication and mention of the grant of the patent: **06.09.2006**
(21) Application number: 03775592.3
(22) Date of filing: 21.10.2003
(51) Int. Cl.: H04N 5/335

(54) **SENSOR ARRAY WITH AMPLITUDE MODULATED OUTPUT SIGNAL**
SENSORMATRIX MIT AMPLITUDENMODULIERTEM AUSGANGSSIGNAL
RESEAU DE DETECTION DANS LEQUEL UN SIGNAL DE SORTIE EST MODULE EN AMPLITUDE

(30) Priority: 23.10.2002 BG 10721502
(43) Date of publication of application: 20.07.2005
(73) Proprietor: Melexis NV, 8900 Leper (BE)
(72) Inventor: KASSOVSKI, Viktor, Vladimirov, Sofia (BG)
(74) Representative: Church, Simon John
(86) International application number: PCT/IB2003/004631
(87) International publication number: WO 2004/039070

(56) References cited:
- US-A- 4 612 581
- PATENT ABSTRACTS OF JAPAN vol. 2000, no. 05, 14 September 2000 (2000-09-14) & JP 2000 050304 A (AIPHONE CO LTD), 18 February 2000 (2000-02-18)
- PATENT ABSTRACTS OF JAPAN vol. 0101, no. 45 (E-407), 28 May 1986 (1986-05-28) & JP 61 007779 A (TOSHIBA KK), 14 January 1986 (1986-01-14)
- PATENT ABSTRACTS OF JAPAN vol. 1995, no. 06, 31 July 1995 (1995-07-31) & JP 7 087058 A (YAGI ANTENNA CO LTD), 31 March 1995 (1995-03-31)

## Description

The present invention relates to sensing devices and particularly arrays of such devices and in particular to a method of transferring signals generated by the individual array elements to an external processor or other such device.

A known arrangement for imaging utilises an array of sensitive elements implemented in the form of a silicon integrated circuit. The image is focussed onto the array and the individual signals generated by each of the sensitive elements are combined within a processing means to generate an image signal. Signals generated by the individual elements must be transferred to the processing means.

In a large array containing many sensitive elements a large number of connections may be needed between the sensitive elements and the processing means. Such a large number of connections can be a problem to implement and may become detrimental to the combined performance of the array and processing means. The routing of the signals between the sensitive elements in the array can occupy a significant amount of space and thereby create undesired spacing between sensitive elements thus degrading the image. Mutual coupling between connections and between connections and other signals can introduce error signals that may degrade the desired signal.

The semiconductor processes used to implement the array of sensitive devices are not always compatible or optimised for implementing the processing means. This is particularly so in the case of infrared, (IR), sensors. This dichotomy of objectives leads to conflicting requirements for the two parts of the system. The conventional solution to this problem is to provide the sensing means and the processing means on two separate integrated circuits. The first integrated circuit contains the array of sensitive devices and the second integrated circuit contains the interface and processing means. The large number of interconnections however associated with providing individual connections from the sensitive elements to the second chip means that there is a large manufacture cost for such a device and there is a question mark over assuring the reliability of such a large number of interconnections.

It is therefore an object of the present invention to provide an improved arrangement for transferring signals from within an array of sensitive elements to an associated processing means.

In accordance with the present invention therefore there is provided a method of transferring signals from a plurality of individual sensitive elements provided on a first integrated circuit to a processing means provided on a second integrated circuit comprising the steps of: sequentially sampling the output of a number of sensitive elements in a predetermined sequence to create a first signal; modulating the amplitude of a constant frequency signal to create a second signal; transmitting said second signal from said first integrated circuit to said second integrated circuit; demodulating said second signal to regenerate said first signal; and passing said regenerated first signal to said processing means, wherein the outputs of a first group of individual sensing elements are sampled and are then used to modulate a carrier signal of constant known frequency and, the output of a second group of individual sensing elements is simultaneously sampled and used to modulate a carrier signal of a different constant known frequency, both modulated signals being simultaneously transmitted to said second integrated circuit and simultaneously demodulated after arriving at said second integrated circuit.

Utilising such a method it is possible to transmit individual signals from individual elements in an array of sensitive elements to an external integrated circuit using a single sensing element signal transfer connection.

In accordance with a second aspect of the present invention there is an array of individual sensing elements provided on a first integrated circuit and suitable processing means for the output of said array of sensing elements provided on a second integrated circuit, said circuits being linked by a single conducting connection, said first integrated circuit comprising in addition to said sensing elements: sampling means, for sequentially sampling the output of said sensing elements in a predetermined order to generate a first signal; signal generating means, for generating a carrier signal of a constant known frequency; modulation means for modulating said carrier signal with said first signal to generate a second signal; and transmission means for transmitting said second signal to the second integrated circuit, said second integrated circuit incorporating means for receiving said second signal, means for demodulating said second signal to regenerate said first signal and means for processing said regenerated first signal, wherein the outputs of a first group of individual sensing elements are sampled and then used to modulate a carrier signal of constant known frequency and the output of a second group of individual sensing elements is simultaneously sampled and used to modulate a carrier signal of a different constant known frequency, both modulated signals being simultaneously transmitted to said second integrated circuit and simultaneously demodulated after arriving at said second integrated circuit.

Documents US-A-4612581 and JP-A-2000 050304 disclose systems wherein amplitude modulation is carried out by means of external components. However, they do not disclose that different groups of sensing elements are simultaneously sampled and used to modulate different carriers simultaneously transmitted to a further processing circuit.

Most preferably, the outputs of several such groups of individual sensing elements are simultaneously sampled, modulated, transmitted and demodulated. In a particularly preferred embodiment the groups of sensing elements correspond to individual rows or columns in the sensing array, the sampling sequence within the group starting with the sensor at one end of said row or column and finishing with the sensor at the opposite end of said row or column. Preferably, each row or column is provided with a dedicated modulating means and the modulated signals are subsequently combined by a suitable combining means.

The sampling process may repeat instantly or alternatively there may be a predetermined delay between successive sampling sequences. Similarly the output of successive sensing elements may be sampled with substantially no time interval or with a finite preset time interval.

Preferably, each sensing element in a row or column is connected to a row or column output conductor by a switch. Sequential sampling of the outputs of the individual sensing elements is preferably carried out by sequentially connecting each sensing element to the row or column output conductor by closing each switch in turn. In an alternative embodiment wherein each sensor generates a differential output said sensing element may be connected by a pair of switches to a pair of output conductors the switches operated in the same manner as above.

Preferably, said second signal undergoes analogue to digital conversion and is subsequently demodulated as a digital process. Preferably, the signals resulting from the digital demodulation process are stored in registers for further image processing. Such digital processing may preferably be carried out by a microprocessor.

Preferably each carrier signal for each row or column or group of individual sensing elements has a different frequency. Most preferably, the carrier frequencies are determined such that any odd harmonics that may be generated during the modulation process using one carrier frequency are at frequencies that do not fall close to other carrier frequencies.

In a particularly preferred embodiment the carrier frequencies are produced by integer division from a single clock frequency signal. In such an embodiment a suitable clock frequency is 1MHz and suitable integer division ratios are 18, 20, 22, 25, 28, 33, 40, and 50. Preferably a single clock signal generator or synchronisation signal generator is connected to both integrated circuits.

Preferably said sensing elements are IR (infrared) sensing elements, although the invention can be embodied with any other radiation sensing elements or any other suitable sensing elements such as pressure, chemical or biological sensing elements disposed in an array.

In order that the invention is more clearly understood, it will now be further described with reference to the accompanying drawings in which:
- Figure 1: is a block diagram of a sensor array incorporating sampling and modulation means according to the present invention;
- Figure 2: is a more detailed view of an alternative modulation means for a sensor array according to the present invention;
- Figure 3.: is a block diagram showing a general arrangement of demodulation and processing means according to the present invention.

An embodiment of the invention will now be described with reference to the drawings by way of example.

The invention.describes a sensing array wherein the sensing elements are provided on a first integrated circuit and means for processing the signals are provided on a second integrated circuit. The output of the sensing elements is sampled modulated on to a carrier signal and transferred from the first to the second integrated circuits wherein it is demodulated and passed to a processing means.

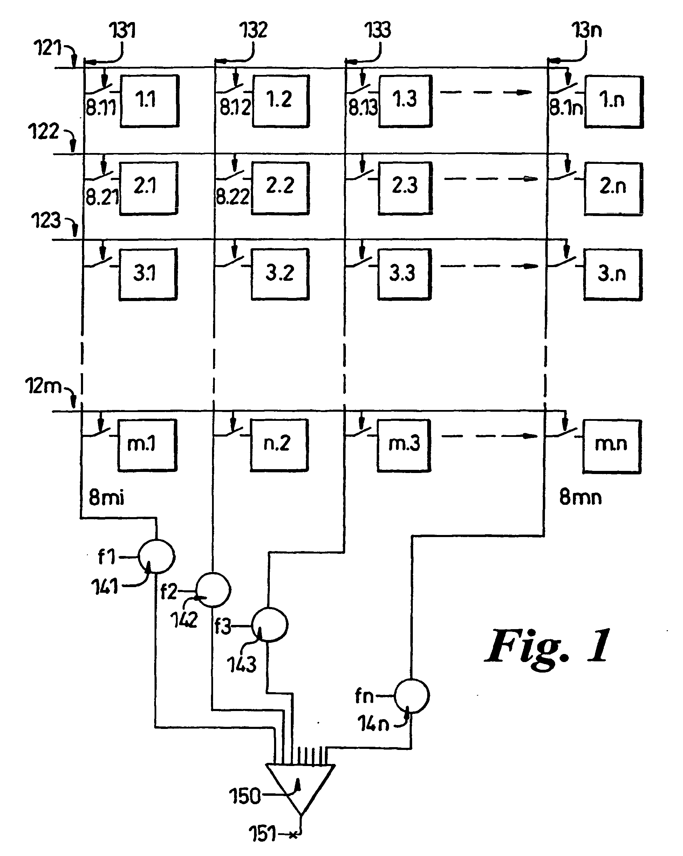

Figure 1 shows a plurality of sensing elements arranged in a square array having n columns and m rows. A plurality of column output conductors 131, 132, 133, ...13n pass through the array in a first or column wise direction each column output conductor being associated with a column of sensing elements m.n in the array. A plurality of switch control conductors 121, 122, 123, ...12m pass through the array in a second or row wise direction each switch control conductor being associated with a row of sensing elements m.n in the array. Each of the sensing elements m.n is provided with a switch 811, ...8mn. The switch 811, ...8mn connects the output signal from the sensing element m.n to the associated column output conductor. Each of the switches 811, ...8mn is connected to and controlled by signals carried on the associated switch control conductors 121, 122, 123, ...12m. The signal carried by each switch control conductor 121, 122, 123, ...12m turns on all the switches 811, ...8mn in a particular row simultaneously. The signals on the switch control conductors 121, 122, 123, ...12m are arranged relative to one another such that each switch 811, ...8mn within each column is sequentially turned on for a time and that at any given time only one switch 811, ...8mn in each column is turned on. In this way each column output conductor 131, 132, 133, ...13n generates a first output signal consisting of sequential samples of the output of each of the sensing elements m.n in the column. When all the sensing elements m.n in each column have been sampled, the process is repeated. The sampling process is synchronised by means of synchronisation signals generated by a signal generator (not shown).

The column output conductors 131, 132, 133, ...13n are each connected to one of a plurality of modulators 141, 142, 143, ...14n. Each of said modulators modulates a carrier signal of a different frequency f1, f2, f3, ...fn by the first output signal of each of the column output conductors 131, 132, 133, ...13n to generate a second output signal. The second output signals from said modulators 141, 142, 143, ...14n are combined in a combining means 150. into a transfer signal 151.

The carrier signal frequencies are all different and are determined such that any odd harmonics that may be generated during the modulation process using one carrier frequency are at frequencies that do not fall close to other carrier frequencies. To achieve this the carrier frequencies are produced by integer division from a single clock frequency signal. A suitable clock frequency is 1 Megahertz and suitable integer division ratios are 18, 20, 22, 25, 28, 33, 40 and 50. The signals on the switch control conductors are derived from the same single clock frequency. Additionally the synchronisation signal is generated from the same single clock frequency signal in a fixed relation to the switch control signals.

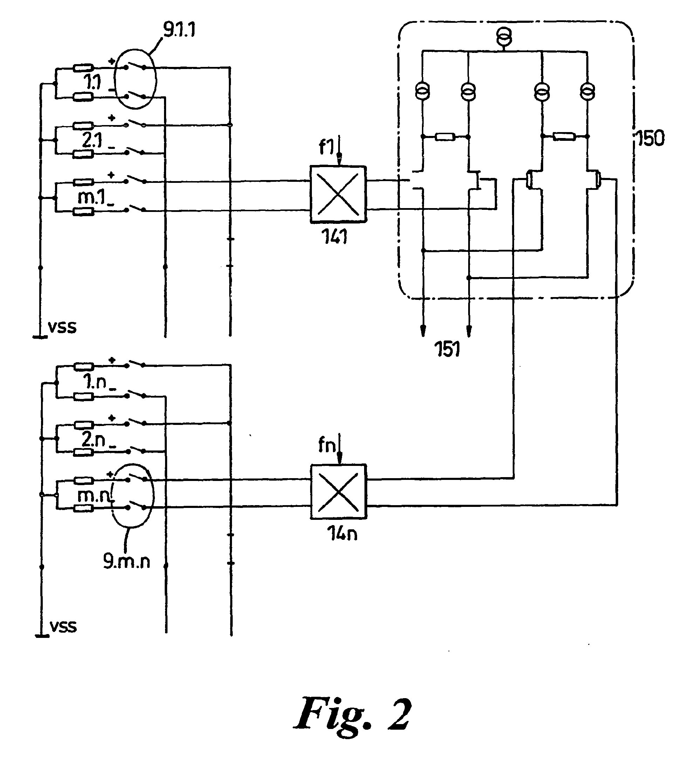

Figure 2 shows a more detailed schematic of an alternative embodiment of the array. In this embodiment, each sensing element m.n element generates a differential signal. Said differential signal is connected through a pair of switches 911, ...9mn onto one of a plurality of pairs of output conductors. The differential signals on the pairs of column output conductors are modulated onto carrier signals and summed to form the transfer signal 151 whilst being maintained as differential signals. In all other aspects, this embodiment is the same as the first embodiment.

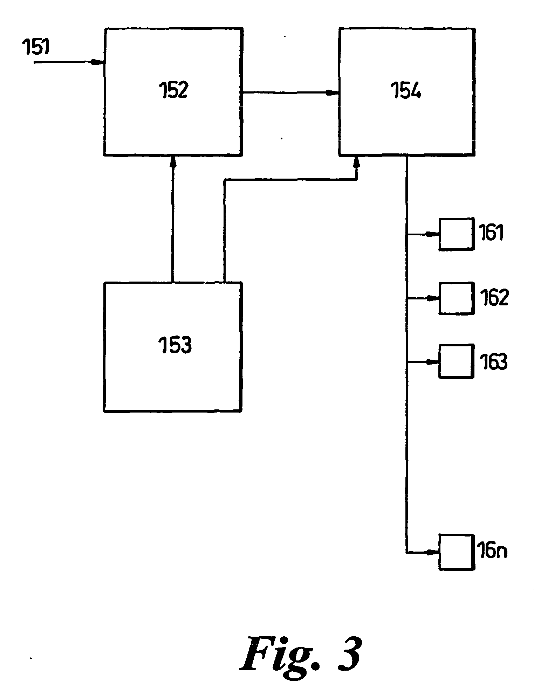

Figure 3 shows an arrangement for demodulating the transfer signal and thereby generating a replica of the first output signals. The transfer signal 151 is connected to a filtering means 152 which separates the transfer signal into individual amplitude modulated signals at different discrete frequencies f1, ...fn. The separated signals are individually passed to demodulation means 154. The demodulation means 154 demodulates the individual separated signals to form a replica of the first output signals from the column output conductors. To achieve this both the filtering means 152 and the demodulation means 154 use the same carrier frequencies as the modulators 141, ...14n, produced by integer division from a single clock frequency. The single clock frequency signal is the same frequency clock signal as used in the modulators 141, ...14n.

These carrier frequency signals are generated by generator means 153. The generator means 153 receives the same synchronisation signal as is received by the signal generator (not shown) of the first integrated circuit. This enables the elements of the transfer signal 151 to be accurately separated from one another and demodulated.

In a preferred embodiment the demodulation means 154 is embodied as an analogue to digital conversion means, operating by the method of converting the analogue transfer signal to a digital signal, converting the carrier signals to digital signals and carrying out the demodulation as a digital process. The signals resulting from the digital demodulation process are stored in registers 161, 162, 163, ...16n for further image processing. Typically, this further digital processing is carried out by a microprocessor.

Of course, it is to be understood that the invention is not to be restricted to the details of the above described embodiment which is described by way of example only.

## Claims

1. A method of transferring signals from a plurality of individual sensing elements (1.1 ... m.n) provided on a first integrated circuit to a processing means provided on a second integrated circuit comprising the steps of sequentially sampling the output of a number of sensing elements in a predetermined sequence to create a first signal, modulating the amplitude of a constant frequency signal (f₁ ... fₙ) to create a second signal (141 ... 14n), transmitting said second signal from said first integrated circuit to said second integrated circuit, demodulating said second signal to regenerate said first signal and passing said regenerated first signal to said processing means wherein the outputs of a first group of individual sensing elements are sampled and are then used to modulate (141) a carrier signal of constant known frequency (f1) and, the output of a second group of individual sensing elements, also provided on said first integrated circuit, is simultaneously sampled and used to modulate (142) a carrier signal of a different constant known frequency (f2), both modulated signals being simultaneously transmitted to said second integrated circuit and simultaneously demodulated after arriving at said second integrated circuit.

2. A method according to Claim 1 wherein outputs of several such groups of individual sensing elements are simultaneously sampled, modulated, transmitted and demodulated.

3. A method according to Claim 2 wherein the groups of sensing elements correspond to individual rows or columns in a sensing array, the sampling sequence within the group starting with a sensor at one end of the said row or column and finishing with the sensor at the opposite end of said row or column.

4. A method according to Claim 3 wherein each row or column is provided with dedicated modulating means and the modulated signals are subsequently combined by a suitable combining means.

5. A method according to any preceding claim wherein the sampling process is repeated instantly.

6. A method according to any preceding Claim wherein there is a predetermined delay between the successive sampling sequences.

7. A method according to any preceding claim wherein said second signal undergoes analogue to digital conversion and is subsequently demodulated as a digital process.

8. A method according to Claim 7 wherein signals resulting from a digital demodulation process are stored in registers for further image processing.

9. A method according to any one of Claims 3 to 8 wherein each carrier signal for each row or column or group of the individual sensing elements has a different frequency.

10. A method according to Claim 9 wherein carrier frequencies are determined such that any odd harmonics that may be generated during the modulation process using one carrier frequency are at frequencies that do not fall close to other carrier frequencies.

11. A method according to Claim 10 wherein carrier frequencies are produced by integer division from a single clock frequency signal.

12. A method according to Claim 11 wherein a suitable clock frequency is 1 Megahertz and a suitable integer division ratios are one of 18, 20, 22, 25, 28, 33, 40 and 50.

13. A sensing device comprising an array of individual sensing elements (1.1 ... m.n) provided on a first integrated circuit and processing means for the output of said array of said sensing elements provided on a second integrated circuit, said circuits being linked by a single conducting connection (151), said first integrated circuit comprising in addition to said sensing elements, sampling means (8.1.1 ... 8.m.n) for sequentially sampling the output of said sensing elements in a predetermined order to generate a first signal, signal generating means for generating a carrier signal of a constant known frequency, modulation means (141 ... 14n) for modulating said carrier signal with said first signal to generate a second signal (151), and transmission means for transmitting said second signal to the second integrated circuit, said second integrated circuit incorporating means (152) for receiving said second signal, means for demodulating (154) said received second signal to regenerate said first signal and means for processing said regenerated first signal wherein the outputs of a first group (1.1 ... m.1) of individual sensing elements are sampled and are then used to modulate (141) a carrier signal (f1) of constant known frequency and, the output of a second group (1.2 ... m.2) of individual sensing elements, also provided on said first integrated circuit, is simultaneously sampled and used to modulate (142) a carrier signal (f2) of a different constant known frequency, both modulated signals being simultaneously transmitted to said second integrated circuit and simultaneously demodulated after arriving at said second integrated circuit.

14. A sensing device according to Claim 13, wherein outputs of several such groups of individual sensing elements are simultaneously sampled, modulated, transmitted and demodulated.

15. A sensing device according to Claim 14 wherein the groups of sensing elements correspond to individual rows or columns in the sensing array, the sampling sequence within the group starting with the sensor at one end of the said row or column and finishing with the sensor at the opposite end of said row or column.

16. A sensing device according to Claim 15 wherein each row or column is provided with dedicated modulating means and the modulated signals are subsequently combined by a suitable combining means.

17. A sensing device according to any one of Claims 13 to 16 wherein the sampling process is repeated instantly.

18. A sensing device according to any one of Claims 13 to 16 wherein there is a predetermined delay between the successive sampling sequences.

19. A sensing device according to any one of Claims 15 to 18 wherein each sensing element in a row or column is connected to a row or column output conductor by a switch.

20. A sensing device according to any one of Claims 13 to 19 wherein sequential sampling of the outputs of individual sensing elements is carried out by sequentially connecting each sensing element to the row or column, output conductor by closing each switch in turn.

21. A sensing device according to Claim 19 or Claim 20 in which each sensor generates a differential output, each said sensing element being connected by a pair of switches to a pair of output conductors, these switches being closed in turn.

22. A sensing device according to any one of Claims 13 to 21 wherein said second signal undergoes analogue to digital conversion and is subsequently demodulated as a digital process.

23. A sensing device according to Claim 22 wherein signals resulting from a digital demodulation process are stored in registers for further image processing.

24. A sensing device according to Claim 22 or Claim 23 in which digital processing is carried out by a microprocessor.

25. A sensing device according to any one of Claims 15 to 24 wherein each carrier signal for each row or column or group of the individual sensing elements has a different frequency.

26. A sensing device according to Claim 25 wherein carrier frequencies are determined such that any odd harmonics that may be generated during the modulation process using one carrier frequency are at frequencies that do not fall close to other carrier frequencies.

27. A sensing device according to Claim 26 wherein carrier frequencies are produced by integer division from a single clock frequency signal.

28. A sensing device according to Claim 27 wherein a suitable clock frequency is 1 Megahertz and a suitable integer division ratios are one of 18, 20, 22, 25, 28, 33, 40 and 50.

29. A sensing device according to any one of claims 24 to 29 wherein a signal clock signal generator or synchronisation signal generator is connected to both integrated circuits.

30. A sensing device according to any preceding claim in which said sensing elements are IR (infrared) sensing elements.

## Patentansprüche

1. Verfahren zum Übertragen von Signalen von einer Vielzahl einzelner Abfühlelemente (1.1 ... m.n), welche auf einer ersten integrierten Schaltung vorgesehen sind, zu einer Verarbeiteeinrichtung, welche auf einer zweiten integrierten Schaltung vorgesehen ist, enthaltend die Schritte eines sequenziellen Auswählens des Ausgangs einer Anzahl von Abfühlelementen in einer vorbestimmten Sequenz, um ein erstes Signal zu erzeugen, Modulieren der Amplitude eines Signals (f₁ ... fₙ), um ein zweites Signal (141 ... 14n) zu erzeugen, Übertragen des genannten zweiten Signals von der ersten integrierten Schaltung zu der genannten zweiten integrierten Schaltung, Demodulieren des genannten zweiten Signals, um das genannte erste Signal zu regenerieren, und Weitergeben des genannten regenerierten ersten Signals zu der genannten Verarbeiteeinrichtung, wobei die Ausgänge einer ersten Gruppe einzelner Abfühlelemente ausgewählt und dann benutzt werden, um ein Trägersignal von konstanter bekannter Frequenz (f₁) zu modulieren, und der Ausgang einer zweiten Gruppe einzelner Abfühlelemente, welche ebenfalls auf der genannten ersten integrierten Schaltung vorgesehen sind, simultan ausgewählt und benutzt wird, um ein Trägersignal von einer anderen konstanten bekannten Frequenz (f₂) zu modulieren (142), wobei beide modulierten Signale simultan zu der genannten zweiten integrierten Schaltung übertragen und simultan nach dem Ankommen an der genannten zweiten integrierten Schaltung demoduliert werden.

2. Verfahren nach Anspruch 1, bei welchem Ausgänge mehrerer derartiger Gruppen von einzelnen Abfühlelementen simultan ausgewählt, moduliert, übertragen und demoduliert werden.

3. Verfahren nach Anspruch 2, bei welchem die Gruppen von Abfühlelementen einzelnen Reihen oder Spalten in einer Abfühlanordnung entsprechen, wobei die Auswählsequenz innerhalb der Gruppe mit einem Sensor an einem Ende der genannten Reihe oder Spalte beginnt und mit dem Sensor an dem gegenüberliegenden Ende der genannten Reihe oder Spalte endet.

4. Verfahren nach Anspruch 3, bei welchem jede Reihe oder Spalte mit einer bestimmten Moduliereinrichtung und die modulierten Signale nachfolgend mit Hilfe einer geeigneten Kombiniereinrichtung kombiniert werden.

5. Verfahren nach einem der vorhergehenden Ansprüche, bei welchem der Auswählvorgang sofort wiederholt wird.

6. Verfahren nach einem der vorhergehenden Ansprüche, bei welchem eine vorbestimmte Verzögerung zwischen aufeinanderfolgenden Auswählsequenzen vorliegt.

7. Verfahren nach einem der vorhergehenden Ansprüche, bei welchem das genannte zweite Signal einer Analog/Digital-Konvertierung unterworfen und anschließend als ein digitaler Vorgang demoduliert wird.

8. Verfahren nach Anspruch 7, bei welchem Signale, welche von einem digitalen Demodulationsprozess stammen, in Registern für eine weitere Bildverarbeitung gespeichert werden.

9. Verfahren nach einem der Ansprüche 3 bis 8, bei welchem jedes Trägersignal für jede Reihe oder Spalte oder Gruppe von einzelnen Abfühlelementen eine unterschiedliche Frequenz hat.

10. Verfahren nach Anspruch 9, bei welchem Trägerfrequenzen derart bestimmt werden, dass ungerade Harmonische, welche während des Modulationsprozesses bei Verwenden einer einzigen Trägerfrequenz erzeugt sein können, bei Frequenzen liegen, welche nicht dicht an andere Trägerfrequenzen fallen.

11. Verfahren nach Anspruch 10, bei welchem Trägerfrequenzen durch Division mit einer ganzen Zahl aus einem einzelnen Taktfrequenzsignal erzeugt werden.

12. Verfahren nach Anspruch 11, bei welchem eine geeignete Taktfrequenz 1 Megahertz und ein geeignetes ganzzahliges Teilverhältnis eines von 18, 20, 22, 25, 28, 33, 40 und 50 ist.

13. Abfühlvorrichtung mit einer Anordnung einzelner Abfühlelemente (1.1 ... m.n) auf einer ersten integrierten Schaltung und Verarbeitungsmitteln für den Ausgang der genannten Anordnung der genannten Abfühlelemente auf einer zweiten integrierten Schaltung, wobei die genannten Schaltungen durch eine einzige Leitungsverbindung (151) miteinander verbunden sind, die genannte erste integrierte Schaltung zusätzlich zu den genannten Abfühlelementen eine Auswähleinrichtung (8.1.1 ... 8 m.n) für sequentielles Auswählen des Ausgangs der genannten Abfühlelemente in einer vorbestimmten Ordnung aufweist, um ein erstes Signal zu erzeugen, signalerzeugende Mittel für ein Erzeugen eines Trägersignals einer konstanten bekannten Frequenz, eine Modulationseinrichtung (141 ... 14n) zum Modulieren des genannten Trägersignals mit dem genannten ersten Signal, um ein zweites Signal (151) zu erzeugen, und eine Übertragungseinrichtung zum Übertragen des genannten zweiten Signals zu der zweiten integrierten Schaltung, wobei die genannte zweite integrierte Schaltung Mittel (152) zum Aufnehmen des genannten zweiten Signals enthält, Mittel zum Demodulieren (154) des genannten aufgenommenen zweiten Signals, um das genannte erste Signal zu regenerieren, und Mittel zum Verarbeiten des genannten regenerierten ersten Signals, bei welcher die Ausgänge einer ersten Gruppe (1.1 ... m.1) einzelner Abfühlelemente ausgewählt und dann benutzt werden, um ein Trägersignal (f₁) von konstanter bekannter Frequenz zu modulieren (141) und der Ausgang einer zweiten Gruppe (1.2 ... m.2) einzelner Abfühlelemente, welcher ebenfalls auf der genannten ersten integrierten Schaltung vorgesehen sind, simultan ausgewählt und benutzt wird, um ein Trägersignal (f₂) einer anderen konstanten bekannten Frequenz zu modulieren, wobei beide modulierten Signale simultan zu der genannten zweiten integrierten Schaltung übertragen und simultan nach dem Ankommen an der genannten zweiten integrierten Schaltung demoduliert werden.

14. Abfühlvorrichtung nach Anspruch 13, bei welcher Ausgänge mehrerer derartiger Gruppen einzelner Abfühlelemente simultan ausgewählt, moduliert, übertragen und demoduliert werden.

15. Abfühlvorrichtung nach Anspruch 14, bei welcher die Gruppen von Abfühlelementen einzelnen Reihen oder Spalten in der Abfühlanordnung entsprechen, wobei die Auswählsequenz innerhalb der Gruppe mit dem Sensor an einem Ende der genannten Reihe oder Spalte beginnt und mit dem Sensor an dem gegenüberliegenden Ende der genannten Reihe oder Spalte endet.

16. Abfühlvorrichtung nach Anspruch 15, bei welcher jede Reihe oder Spalte mit vorbestimmten Moduliermitteln versehen und die demodulierten Signale nachfolgen durch eine geeignete Kombiniereinrichtung kombiniert werden.

17. Abfühlvorrichtung nach einem der Ansprüche 13 bis 16, bei welcher der Auswählprozess sofort wiederholt wird.

18. Abfühlvorrichtung nach einem der Ansprüche 13 bis 16, bei welcher eine vorbestimmte Verzögerung zwischen den aufeinanderfolgenden Auswählsequenzen vorhanden ist.

19. Abfühlvorrichtung nach einem der Ansprüche 15 bis 18, bei welcher jedes Abfühlelement in einer Reihe oder Spalte durch einen Schalter mit einem Reihen- oder Spaltenausgangsleiter verbunden ist.

20. Abfühlvorrichtung nach einem der Ansprüche 13 bis 19, bei welcher ein sequentielles Auswählen der Ausgänge einzelner Abfühlelemente durch sequentielles Verbinden jedes Abfühlelementes mit dem Reihen- oder Spaltenausgangsleiters durch Schließen jedes Schalters in Folge erfolgt.

21. Abfühlvorrichtung nach Anspruch 19 oder 20, bei welcher jeder Sensor einen Differentialausgang erzeugt, wobei jedes genannte Abfühlelement durch ein Paar von Schaltern mit einem Paar von Ausgangsleitern verbunden ist, wobei diese Schalter in Folge geschlossen werden.

22. Abfühlvorrichtung nach einem der Ansprüche 13 bis 21, bei welcher das genannte zweite Signal eine Analog/Digital-Konvertierung durchmacht und nachfolgend als ein Digitalprozess demoduliert wird.

23. Abfühlvorrichtung nach Anspruch 22, bei welcher Signale, welche sich aus einem digitalen Demodulationsprozess ergeben, in Registern für weitere Bildverarbeitung gespeichert werden.

24. Abfühlvorrichtung nach Anspruch 22 oder 23, bei welcher eine Digitalverarbeitung durch einen Mikroprozessor ausgeführt wird.

25. Abfühlvorrichtung nach einem der Ansprüche 15 bis 24, bei welcher jedes Trägersignal für jede Reihe oder Spalte oder Gruppe der individuellen Abfühlelemente eine andere Frequenz hat.

26. Abfühlvorrichtung nach Anspruch 25, bei welcher Trägerfrequenzen derart bestimmt werden, dass jede ungerade Harmonische, welche während des Modulationsprozesses unter Verwendung einer Trägerfrequenz generiert wird, bei Frequenzen liegen, welche nicht dicht zu anderen Trägerfrequenzen fallen.

27. Abfühlvorrichtung nach Anspruch 26, bei welcher Trägerfrequenzen aus einem einzigen Taktgebersignal durch Teilen durch eine ganze Zahl erzeugt werden.

28. Abfühlvorrichtung nach Anspruch 27, bei welcher eine geeignete Taktfrequenz 1 Megahertz und ein geeignetes ganzzahliges Teilungsverhältnis eines aus 18, 20, 22, 25, 28, 33, 40 und 50 ist.

29. Abfühlvorrichtung nach einem der Ansprüche 24 bis 29, bei welcher ein Signaltaktsignalgenerator oder Synchronisationssignalgenerator mit beiden integrierten Schaltungen verbunden ist.

30. Abfühlvorrichtung nach einem der vorhergehenden Ansprüche, bei welcher die genannten Abfühlelemente IR (Infrarot) Abfühlelemente sind.

## Revendications

1. Procédé de transfert de signaux à partir d'une pluralité d'éléments sensibles (1.1... m.n) individuels fournis sur un premier circuit intégré vers un moyen de traitement fourni sur un second circuit intégré comprenant les étapes consistant à échantillonner séquentiellement la sortie d'un nombre d'éléments sensibles dans une séquence prédéterminée pour créer un premier signal, moduler l'amplitude d'un signal de fréquence constant (f1... fn) pour créer un second signal (141... 14n), transmettre ledit second signal à partir dudit premier circuit intégré vers ledit second circuit intégré, démoduler ledit second signal pour régénérer ledit premier signal et passer ledit premier signal régénéré vers ledit moyen de traitement dans lequel les sorties d'un premier groupe d'éléments sensibles individuels sont échantillonnées et sont ensuite utilisées pour moduler (141) un signal modulé de fréquence connue constante (f1) et, la sortie d'un second groupe d'éléments sensibles individuels, également fournis sur ledit premier circuit intégré, est échantillonnée simultanément et utilisée pour moduler (142) un signal modulé d'une fréquence connue constante différente (f2), les deux signaux modulés étant simultanément transmis vers ledit second circuit intégré et simultanément démodulés après être arrivés audit second circuit intégré.

2. Procédé selon la revendication 1 dans lequel les sorties de plusieurs tels groupes d'éléments sensibles individuels sont simultanément échantillonnées, modulées, transmises et démodulées.

3. Procédé selon la revendication 2 dans lequel les groupes d'éléments sensibles correspondent à des rangées ou colonnes individuelles dans une matrice sensible, la séquence d'échantillonnage à l'intérieur du groupe commençant par un capteur à une extrémité de ladite rangée ou colonne et finissant par le capteur à l'extrémité opposée de ladite rangée ou colonne.

4. Procédé selon la revendication 3 dans lequel chaque rangée ou colonne est munie d'un moyen de modulation dédié et les signaux modulés sont ultérieurement conjugués à un moyen de combinaison approprié.

5. Procédé selon l'une quelconque des revendications précédentes dans lequel le traitement d'échantillonnage est répété instantanément.

6. Procédé selon l'une quelconque des revendications précédentes dans lequel il y a un délai prédéterminé entre les séquences successives d'échantillonnage.

7. Procédé selon l'une quelconque des revendications précédentes dans lequel ledit second signal subit une conversion d'analogique à numérique et est ultérieurement démodulé en tant que traitement numérique.

8. Procédé selon la revendication 7 dans lequel les signaux résultant d'un traitement de démodulation numérique sont stockés dans des registres pour un traitement d'image supplémentaire.

9. Procédé selon l'une quelconque des revendications 3 à 8 dans lequel chaque signal modulé pour chaque rangée ou colonne ou groupe d'éléments sensibles individuels a une fréquence différente.

10. Procédé selon la revendication 9 dans lequel les fréquences porteuses sont déterminées de telle façon que n'importe quels harmoniques impairs qui peuvent être générés pendant le traitement de modulation en utilisant une fréquence porteuse sont à des fréquences qui ne tombent pas à proximité d'autres fréquences porteuses.

11. Procédé selon la revendication 10 dans lequel les fréquences porteuses sont produites par division entière à partir d'un seul signal de fréquence d'horloge.

12. Procédé selon la revendication 11 dans lequel une fréquence d'horloge appropriée est de 1 mégahertz et des rapports de division entière appropriés sont l'un de 18, 20, 22, 25, 28, 33, 40 et 50.

13. Dispositif sensible comprenant une matrice d'éléments sensibles individuels (1.1... m.n) fournis sur un premier circuit intégré et un moyen de traitement pour la sortie de ladite matrice desdits éléments sensibles fournis sur un second circuit intégré, lesdits circuits étant reliés par une seule connexion de conduction (151), ledit premier circuit intégré comprenant en plus desdits éléments sensibles, un moyen d'échantillonnage (8.1.1... 8.m.n) pour échantillonner séquentiellement la sortie desdits éléments sensibles dans un ordre prédéterminé pour générer un premier signal, un moyen de génération de signal pour générer un signal modulé d'une fréquence connue constante, un moyen de modulation (141... 14n) pour moduler ledit signal modulé avec ledit premier signal pour générer un second signal (151), et un moyen de transmission pour transmettre ledit second signal vers le second circuit intégré, ledit second circuit intégré incorporant un moyen (152) pour recevoir ledit second signal, un moyen pour démoduler (154) ledit second signal reçu pour régénérer ledit premier signal et un moyen de traitement dudit premier signal régénéré dans lequel les sorties d'un premier groupe (1.1... m.1) d'éléments sensibles individuels sont échantillonnées et sont ensuite utilisées pour moduler (141) un signal modulé (f1) d'une fréquence connue constante et, la sortie d'un second groupe (1.2... m.2) d'éléments sensibles individuels, fournis également sur ledit premier circuit intégré, est simultanément échantillonnée et utilisée pour moduler (142) un signal modulé (f2) d'une fréquence connue constante différente, les deux signaux modulés étant simultanément transmis audit second circuit intégré et simultanément démodulés après être arrivés audit second circuit intégré.

14. Dispositif sensible selon la revendication 13, dans lequel les sorties de plusieurs tels groupes d'éléments sensibles individuels sont simultanément échantillonnées, modulées, transmises et démodulées.

15. Dispositif sensible selon la revendication 14 dans lequel les groupes d'éléments sensibles correspondent à des rangées ou colonnes individuelles dans la matrice sensible, la séquence d'échantillonnage à l'intérieur du groupe commençant par le capteur à une extrémité de ladite rangée ou colonne et finissant par le capteur à l'extrémité opposée de ladite rangée ou colonne.

16. Dispositif sensible selon la revendication 15 dans lequel chaque rangée ou colonne est munie de moyens de modulation dédiés et les signaux modulés sont ultérieurement conjugués à un moyen de combinaison approprié.

17. Dispositif sensible selon l'une quelconque des revendications 13 à 16 dans lequel le traitement d'échantillonnage est répété instantanément.

18. Dispositif sensible selon l'une quelconque des revendications 13 à 16 dans lequel il y a un délai prédéterminé entre les séquences d'échantillonnage successives.

19. Dispositif sensible selon l'une quelconque des revendications 15 à 18 dans lequel chaque élément sensible dans une rangée ou colonne est relié à un conducteur de sortie d'une rangée ou colonne par un commutateur.

20. Dispositif sensible selon l'une quelconque des revendications 13 à 19 dans lequel l'échantillonnage séquentiel des sorties des éléments sensibles individuels est effectué en reliant séquentiellement chaque élément sensible au conducteur de sortie de rangée ou colonne en fermant chaque commutateur à tour de rôle.

21. Dispositif sensible selon la revendication 19 ou la revendication 20 dans lequel chaque capteur génère une sortie différentielle, chaque dit élément sensible étant relié par une paire de commutateurs à une paire de conducteurs de sortie, ces commutateurs étant fermés à tour de rôle.

22. Dispositif sensible selon l'une quelconque des revendications 13 à 21 dans lequel ledit second signal subit une conversion d'analogique à numérique et est ultérieurement démodulé en tant que traitement numérique.

23. Dispositif sensible selon la revendication 22 dans lequel les signaux résultant d'un traitement de démodulation numérique sont stockés dans des registres pour un traitement d'image supplémentaire.

24. Dispositif sensible selon la revendication 22 ou la revendication 23 dans lequel le traitement numérique est effectué par un microprocesseur.

25. Dispositif sensible selon l'une quelconque des revendications 15 à 24 dans lequel chaque signal modulé pour chaque rangée ou colonne ou groupe d'éléments sensibles individuels a une fréquence différente.

26. Dispositif sensible selon la revendication 25 dans lequel les fréquences porteuses sont déterminées de telle façon que n'importe quels harmoniques impairs qui peuvent être générés pendant le traitement de modulation en utilisant une fréquence porteuse soient à des fréquences qui ne se trouvent pas à proximité d'autres fréquences porteuses.

27. Dispositif sensible selon la revendication 26 dans lequel les fréquences porteuses sont produites par division entière à partir d'un seul signal de fréquence d'horloge.

28. Dispositif sensible selon la revendication 27 dans lequel une fréquence d'horloge appropriée est de 1 mégahertz et des rapports de division entière appropriés sont l'un de 18, 20, 22, 25, 28, 33, 40 et 50.

29. Dispositif sensible selon l'une quelconque des revendications 24 à 29 dans lequel un générateur de signal d'horloge ou générateur de signal de synchronisation est relié aux deux circuits intégrés.

30. Dispositif sensible selon l'une quelconque des revendications précédentes dans lequel lesdits éléments sensibles sont des éléments sensibles IR (infrarouges).
